# EUROPÄISCHE PATENTSCHRIFT

(11) **EP 2 098 784 B1**
(45) Veröffentlichungstag und Bekanntmachung des Hinweises auf die Patenterteilung: **27.06.2012**
(21) Anmeldenummer: 09450041.0
(22) Anmeldetag: 25.02.2009
(51) Int. Cl.: B65G 69/04

(54) **Vorrichtung zum Befüllen eines Laggerraumes mit stückeligem Brennstoff**
Apparatus to fill a storage tank with granulated fuel
Appareil pour le remplissage d'un resevoir de stockage avec du combustible granulé

(30) Priorität: 03.03.2008 AT 3382008
(43) Veröffentlichungstag der Anmeldung: 09.09.2009
(73) Patentinhaber: Hargassner GmbH, A 4952 Weng (AT)
(72) Erfinder: Hargassner, Anton, A 4952 Weng (AT)
(74) Vertreter: Hübscher, Helmut

(56) Entgegenhaltungen:
- DE-A1- 4 137 955
- JP-A- 60 052 411
- US-A- 1 809 904
- US-A- 5 735 319
- US-A1- 2003 098 373
- US-A1- 2007 026 912

## Beschreibung

Die Erfindung bezieht sich auf eine Vorrichtung zum Befüllen eines Lagerraumes mit stückeligem Brennstoff mit einem oben im Lagerraum mündenden Schneckenförderer, der eine mit Hilfe eines Motors antreibbare Förderschnecke und ein Schneckengehäuse umfasst.

Zum Befüllen von Lagerräumen mit stückeligem Brennstoff, wie Pellets oder Hackgut, werden üblicherweise ansteigende Band- oder Schneckenförderer eingesetzt, die den Brennstoff über eine Befüllöffnung in den Lagerraum abwerfen, allerdings mit dem Nachteil, dass sich aufgrund der jeweils vorgegebenen Abwurfstelle ein Schüttkegel bildet, der einer gleichmäßigen Befüllung des Lagerraumes entgegensteht. Wird die Abwurfstelle verlagert, so kann zwar wegen der dann sich überschneidenden Schüttkegel das Lagerraumvolumen besser genutzt werden, doch bleibt der grundsätzliche Nachteil der Schüttkegelausbildung bestehen.

Um insbesondere einen langgestreckten Behälter befüllen zu können, ist es bekannt (DE41 37 955 A1), das über eine Förderschnecke geförderte Füllmaterial durch zwei am oberen Ende der Förderschnecke angebrachte Wurfflügel im Bereich eines Auslaufelementes zu beschleunigen und mit einer gewissen Geschwindigkeit in einer vorgegebenen Richtung abzuwerfen, sodass es in einem örtlich begrenzten Bereich im Vorratsbehälter auftrifft.

Darüber hinaus ist eine Streuvorrichtung, insbesondere zur Rasenpflege, bekannt (US 2003/0098373 A1), die über die Rasenfläche bewegt wird und zum Aufbringen des Streuguts mit nebeneinandergereihten, jeweils angetriebenen Streutellern versehen ist. Diese mit Wurfschaufeln ausgerüsteten Streuteller sind in einem Gehäuse gelagert, das eine in Fahrrichtung ausgerichtete Auswurföffnung aufweist, sodass das Streugut aufgrund der Vorschubbewegung der Streuvorrichtung in Streifen vorgegebener Breite auf die Rasenfläche abgeworfen wird. Um die Streugutverteilung über die Streifenbreite zu beeinflussen, kann die in Drehrichtung des Streutellers zulaufseitige Begrenzung der Auswurföffnung einen Verlauf aufweisen, der einen über einen vorgegebenen Drehwinkel verteilten Abwurf unterstützt, beispielsweise durch einen in Umfangsrichtung schräg abfallenden Öffnungsrand. Solche Streuvorrichtungen sind dazu ausgelegt, eine gleichmäßige Streugutverteilung über eine Rasenfläche aufgrund einer entsprechenden Vorschubbewegung der Streuvorrichtung sicherzustellen.

Der Erfindung liegt somit die Aufgabe zugrunde, eine Vorrichtung der eingangs geschilderten Art zum Befüllen eines Lagerraumes mit stückeligem Brennstoff so auszugestalten, dass eine weitgehend gleichmäßige Lagerraumbefüllung sichergestellt werden kann, insbesondere bei einer Befüllung von einer Randseite des Lagerraumes her.

Die Erfindung löst die gestellte Aufgabe dadurch, dass am Austrittsende des Schneckengehäuses des vertikalen Schneckenförderers ein zur Schneckenwelle koaxialer, ringfömiger Verteilerteller vorgesehen ist, der mit wenigstens einem mit der Schneckenwelle umlaufenden Auswerfer zusammenwirkt, und dass der Verteilerteller entlang eines Umfangsabschnittes von einer Leit-wand umschlossen ist, deren über den Verteilerteller vorstehender Umfangsrand in Drehrichtung der Schneckenwelle zumindest im Anschluss an einen Leitwandabschnitt mit einem zum Verteilerteller parallelen Randverlauf gegen den Verteilerteller hin abfällt.

Durch das Vorsehen eines Verteilertellers am Austrittsende des Schneckengehäuses wird der stückelige Brennstoff durch die vertikale Förderschnecke gleichmäßig über den Umfang des Verteilertellers auf diesen gefördert, sodass mit Hilfe des mit der Schneckenwelle umlaufenden Auswerfers der stückelige Brennstoff entsprechend der Auswurfweite des Auswerfers über die Grundfläche des Lagerraums verteilt werden kann. Ein solcher mit wenigstens einem Auswerfer zusammenwirkender Verteilerteller kann jedoch keine über die Grundfläche des Lagerraumes gleichmäßige Brennstoffverteilung sicherstellen, wenn der Schneckenförderer nicht mittig im Lagerraum angeordnet wird, was im Allgemeinen ausgeschlossen werden kann. Sobald der Schneckenförderer in einer bevorzugten Art in den Randbereich des Lagerraumes verlagert wird, stellt sich eine unerwünschte, ungleichmäßige Brennstoffverteilung über die Grundfläche des Lagerraumes ein, weil ja ohne zusätzliche Maßnahmen der Brennstoff gleichmäßig über den Umfang des Verteilertellers abgeworfen wird. Aus diesem Grunde ist der Verteilerteller entlang eines Umfangsabschnittes von einer Leitwand umschlossen, deren über den Verteilerteller vorstehender Umfangsrand in Drehrichtung der Schneckenwelle zumindest im Anschluss an einen Leitwandabschnitt mit einem zum Verteilerteller parallele Randverlauf gegen den Verteilerteller hin abfällt. Die den Verteilerteller teilweise umschließende Umfangswand verhindert bei einer entsprechenden Ausrichtung, dass Brennstoff im Bereich einer dem Schneckenförderer unmittelbar benachbarten Wand des Lagerraumes abgeworfen wird. Dies bedeutet, dass sich im Bereich dieses ein Abwerfen des Brennstoffes unterbindenden Leitwandabschnittes Brennstoff ansammelt, der durch den Auswerfer mitgenommen wird. Diese größere Brennstoffmenge darf jedoch nur allmählich über einen anschließenden Umfangsabschnitt des Verteilertellers abgeworfen werden. Aus diesem Grunde bildet die Leitwand einen über den Verteilerteller vorstehenden Umfangsrand, der in Drehrichtung der Schneckenwelle zum Verteilerteller hin abfällt, sodass die durch die Leitwand auf dem Verteilerteller zurückgehaltene Brennstoffmenge während der Umdrehung des Auswerfers stetig kleiner wird. Mit dieser Maßnahme kann daher ein Lagerraum von einer Randseite her gleichmäßig mit stückeligem Brennstoff befüllt werden. Es ist lediglich der einen Abwurf unterbindende Abschnitt und der die Abwurfmenge steuernde Leitwandabschnitt hinsichtlich ihrer Umfangslängen an die jeweilige Anordnung des Schneckenförderers in Bezug auf die Lagerraumgeometrie anzupassen.

Damit die abzuwerfende Brennstoffmenge über die Umfangslänge der Leitwand vorteilhaft dosiert werden kann, kann dem Verteilerteller eine Deckscheibe mit axialem Abstand gegenüberliegend angeordnet werden, zwischen der und der Leitwand ein sich in Drehrichtung der Schneckenwelle vergrößernder Auswurfspalt ergibt. Die Weite dieses Auswurfspaltes begrenzt die durch den Austragsspalt abzuwerfende Brennstoffmenge, was vor allem dann von Bedeutung ist, wenn der Raum zwischen dem Verteilerteller und der Deckscheibe unmittelbar vor Beginn des Auswurfspaltes weitgehend mit Brennstoff aufgefüllt wird.

Um eine Anpassung der Leitwand an die geometrischen Voraussetzungen des Lagerraumes in Hinblick auf die Anordnung des Schneckenförderers vornehmen zu können, kann die Leitwand gegenüber dem Verteilerteller in Umfangsrichtung und/oder in axialer Richtung zumindest abschnittsweise verstellbar gelagert werden.

Die Anordnung des Antriebsmotors im Bereich des unteren Endes des vertikalen Schneckenförderers hat den Vorteil, dass der Abwurf des Brennstoffs vom Verteilerteller durch den Schneckenantrieb nicht beeinträchtigt werden kann. Allerdings fehlt in vielen Fällen der für eine Anordnung des Schneckenantriebes unterhalb des Schneckenförderers erforderliche Platz. Der Antriebsmotor für die Förderschnecke kann dann an der über den Verteilerteller axial vorstehenden Schneckenwelle angreifen, was keine Schwierigkeiten macht, wenn der Antriebsmotor an der Decke des Lagerraumes befestigt werden kann. Andernfalls ist der Antriebsmotor auf einem am Schneckengehäuse abgestützten, den Verteilerteller und die Leitwand umgreifenden Träger zu lagern, der gegenüber dem Verteilerteller durch die Leitwand abzuschirmen ist. Dies bedeutet, dass ein solcher den Verteilerteller umgreifender Träger einer benachbarten Wand des Lagerraumes zugeordnet werden soll, um den Brennstoffabwurf in den Lagerraum nicht durch diesen Träger zu behindern.

In der Zeichnung ist der Erfindungsgegenstand in einem Ausführungsbeispiel dargestellt. Es zeigen
- Fig. 1: eine erfindungsgemäße Vorrichtung zum Befüllen eines Lagerraumes mit stückeligem Brennstoff in einer vereinfachten Vorderansicht,
- Fig. 2: diese Vorrichtung in einem Schnitt nach der Linie II-II der Fig. 1 und die
- Fig. 3 und 4: je einen Lagerraum mit unterschiedlich positionierten Befüllvor- richtungen in einer vereinfachten Draufsicht in einem kleineren Maßstab.

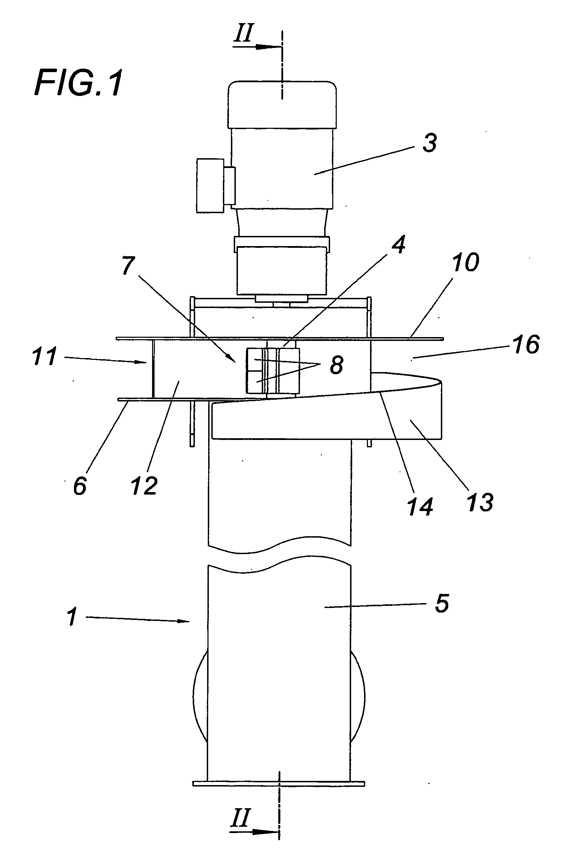

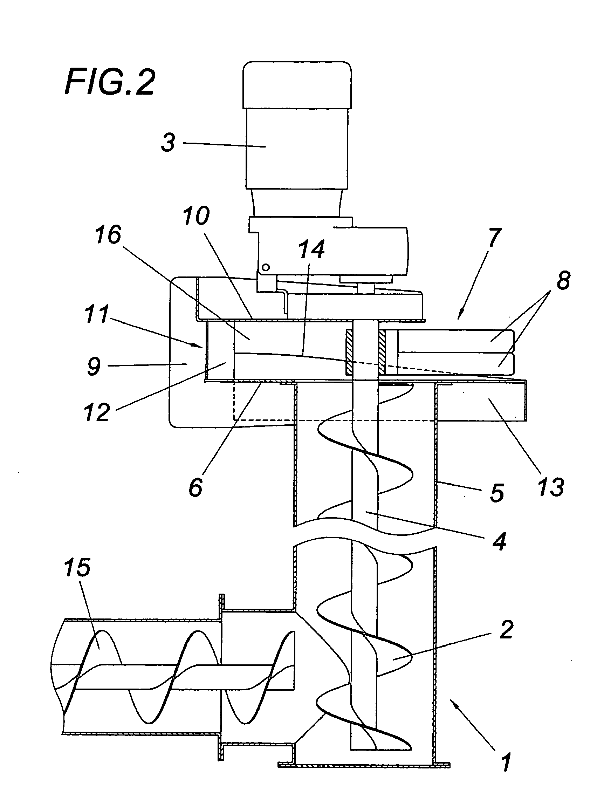

Gemäß den Fig. 1 und 2 umfasst die Vorrichtung zum Befüllen eines Lagerraumes mit stückeligem Brennstoff einen vertikalen Schneckenförderer 1 mit einer Förderschnecke 2, die von einem Motor 3 her über die Schneckenwelle 4 angetrieben wird. Am oberen Austrittsende des Schneckengehäuses 5 ist ein zur Schneckenachse koaxialer, ringförmiger Verteilerteller 6 angeordnet, der mit einem auf der Schneckenwelle 4 sitzenden Auswerfer 7 zusammenwirkt. Dieser Auswerfer 7 weist zwei im Wesentlichen radial zum Verteilerteller 6 verlaufende Blattfedern 8 auf, um ein Ausweichen des Auswerfers 7 bei einer Förderung eines sperrigen Fremdkörpers zu ermöglichen. Am Schneckengehäuse 5 ist ein C-förmiger Träger 9 abgestützt, der den Verteilerteller 6 außen umgreift und den Motor 3 trägt. Dieser Träger 9 ist außerdem mit einer dem Verteilerteller 6 mit axialem Abstand gegenüberliegenden Deckplatte 10 versehen, zwischen der und dem Verteilerteller 6 eine sich über einen Umfangsbereich des Verteilertellers 6 erstreckende Leitwand 11 befindet. Diese den Verteilerteller 6 bereichsweise umschließende Leitwand 11 weist einen Leitwandabschnitt 12, der den Verteilerteller 6 mit der Deckplatte 10 in einem vorgegebenen, den Träger 9 einschließenden Umfangsbereich verbindet, sowie einen Leitwandabschnitt 13 auf, der in Drehrichtung der Schneckenwelle 4 an den Leitwandabschnitt 12 anschließt und einen in Drehrichtung der Schneckenwelle 4 gegen den Verteilerteller 6 hin abfallenden, über den Verteilerteller 6 vorstehenden Umfangsrand 14 bildet. Diese Leitwand 11 bewirkt, dass Brennstoff, der über eine Zubringerschnecke 15 dem Schneckenförderer 1 im Bereich seines unteren Endes, aufgegeben wird, nicht gleichmäßig über den Umfang verteilt vom Verteilerteller 6 abgeworfen werden kann, obwohl der Brennstoff durch die Förderschnecke 2 gleichmäßig über den Umfang verteilt auf den Verteilerteller 6 gefördert wird. Im Umfangsbereich des Leitwandabschnittes 12 ist kein Brennstoffabwurf möglich, sodass der Auswerfer 8 eine größere Brennstoffmenge aus dem Umfangsbereich des Leitwandabschnittes 12 in den Bereich des Leitwandabschnittes 13 fördert, der mit seinem über den Verteilerteller 6 vorstehenden Umfangsrand 14 einen Auswurfspalt 16 zwischen dem Leitwandabschnitt 13 und der Deckplatte 10 begrenzt. Der Leitwandabschnitt 13 hält daher einen Teil des aus dem Bereich des Leitwandabschnittes 12 geförderten Brennstoffs zurück, was aufgrund des zum Verteilerteller 6 hin abfallenden Umfangsrandes 14 des Leitwandabschnittes 13 zu einem vergleichmäßigten Abwurf des Brennstoffes im Anschluss an den eine Abwurfsperre darstellenden Leitwandabschnitt 12 führt. Durch eine axiale Verlagerung des Leitwandabschnittes 13 kann auf die je Umfangsabschnitt aufgeworfene Brennstoffmenge Einfluss genommen werden.

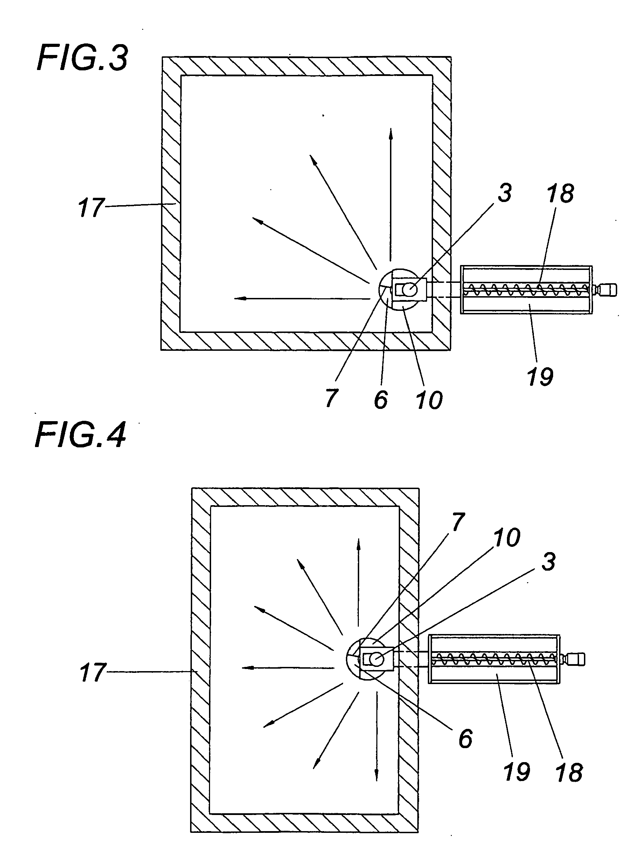

In der Fig. 3 wird ein Lagerraum 17 in einem Horizontalschnitt angedeutet, in dem die Befüllvorrichtung in einem Eckbereich angeordnet ist. Aufgrund dieser Anordnung erstreckt sich der Leitwandabschnitt 12 über den Eckbereich, sodass sich ein Winkelbereich für den Brennstoffabwurf von 90° ergibt. Die sich über den Winkelbereich des Brennstoffabwurfs ergebende Abwurfrate hängt vom Auswurfspalt 19 bzw. von der den Verteilerteller 6 überragenden Höhe des Leitwandabschnittes 13 und damit vom Verlauf des Umfangsrandes 14 dieses Leitwandabschnittes ab und kann daher auch über diesen Verlauf beeinflusst werden. Damit sind alle Voraussetzungen für eine gleichmäßige Befüllung des Lagerraumes 17 mit Brennstoff erfüllt, der in eine mit einer Austragsschnecke 18 versehene Aufgabeschurre 19 eingefüllt wird. Der Brennstoffabwurf über den Abwurfbereich ist durch entsprechende Pfeile angedeutet.

Die Fig. 4 zeigt ebenfalls ein Abwurfbild für einen Lagerraum 17. Zum Unterschied zum Lagerraum der Fig. 3 ist die Befüllvorrichtung im Lagerraum 17 der Fig. 4 jedoch in der Mitte einer Längswand des Lagerraumes 17 vorgesehen. Dies bedeutet im Lichte der bisherigen Ausführungen, dass der Leitwandabschnitt 12 einen Abwurfbereich freigeben muss, der sich über 180° erstreckt. An diesen einen Brennstoffabwurf unterbindenden Leitwandabschnitt 12 schließt sich dann in Drehrichtung der Schneckenwelle 4 ein Leitwandabschnitt 13 mit einem gegen den Verteilerteller 6 hin abfallenden Umfangsrand 14 an, um den Brennstoff weitgehend gleichmäßig über die Grundfläche des Lagerraumes 17 abwerfen zu können.

Die Erfindung ist selbstverständlich nicht auf das dargestellte Ausführungsbeispiel beschränkt. So könnte der Antriebsmotor 3, aber auch der Verteilerteller 6 gesondert vom Schneckengehäuse 5, beispielsweise an einer benachbarten Wand oder einer Decke des Lagerraumes 17, gelagert werden.

## Patentansprüche

1. Vorrichtung zum Befüllen eines Lagerraumes (17) mit stückeligem Brennstoff mit eine Schneckenförderer (1), der oben im Lagerraum (17) münden kann und der eine mit Hilfe eines Motors (3) antreibbare Förderschnecke (2) und ein Schneckengehäuse (5) umfasst, **dadurch gekennzeichnet, dass** am Austrittsende des Schneckengehäuses (5) des vertikalen Schneckenförderers (1) ein zur Schneckenwelle (4) koaxialer, ringfömiger Verteilerteller (6) vorgesehen ist, der mit wenigstens einem mit der Schneckenwelle (4) umlaufenden Auswerfer (7) zusammenwirkt, und dass der Verteilerteller (6) entlang eines Umfangsabschnittes von einer Leitwand (11) umschlossen ist, deren über den Verteilerteller (6) vorstehender Umfangsrand (14) in Drehrichtung der Schneckenwelle (4) zumindest im Anschluss an einen Leitwandabschnitt (12) mit einem zum Verteilerteller (6) parallelen Randverlauf gegen den Verteilerteller (6) hin abfällt.

2. Vorrichtung nach Anspruch 1, **dadurch gekennzeichnet, dass** dem Verteilerteller (6) eine Deckscheibe (10) mit axialem Abstand gegenüberliegt, zwischen der und der Leitwand (11) ein sich in Drehrichtung der Schneckenwelle (4) vergrößernder Auswurfspalt (16) ergibt.

3. Vorrichtung nach Anspruch 1 oder 2, **dadurch gekennzeichnet, dass** die Leitwand (11) gegenüber dem Verteilerteller (6) in Umfangsrichtung und/oder in axialer Richtung zumindest abschnittsweise verstellbar gelagert ist.

4. Vorrichtung nach einem der Ansprüche 1 bis 3, **dadurch gekennzeichnet, dass** der Antriebsmotor (3) für die Förderschnecke (2) an der über den Verteilerteller (6) axial vorstehenden Schneckenwelle (4) angreift.

5. Vorrichtung nach Anspruch 4, **dadurch gekennzeichnet, dass** der Antriebsmotor (3) auf einem am Schneckengehäuse (5) abgestützten, den Verteilerteller (6) und die Leitwand (11) umgreifenden Träger (9) gelagert ist.

## Claims

1. Apparatus for filling a storage chamber (17) with a granulated fuel, having a screw conveyor (1), which can issue at the top in the storage chamber (17) and which has a conveying screw (2), which can be driven with the aid of a motor (3), and a screw housing (5), **characterised in that** at the output end of the screw housing (5) of the vertical screw conveyor (1) an annular distributor plate (6), which is coaxial to the screw shaft (4), is provided and cooperates with at least one ejector (7) which turns with the screw shaft (4), and that the distributor plate (6) is surrounded along its peripheral portion by a guide wall (11), the peripheral edge (14) of which, protruding over the distributor plate (6), falls away towards the distributor plate (6) in the rotational direction of the screw shaft (4) at least subsequent to a guide wall portion (12) with an edge extension parallel to the distributor plate (6).

2. Apparatus as claimed in claim 1, **characterised in that** a cover disc (10) is located opposite the distributor plate (6) and at an axial distance therefrom, between which cover disc and the guide wall (11) an ejection gap (16) is produced, which becomes larger in the rotational direction of the screw shaft (4).

3. Apparatus as claimed in claim 1 or 2, **characterised in that** the guide wall (11) is mounted so as to be adjustable at least in portions with respect to the distributor plate (6) in the peripheral direction and/or in the axial direction.

4. Apparatus as claimed in any one of claims 1 to 3, **characterised in that** the drive motor (3) for the conveyor screw (2) engages on the screw shaft (4) protruding axially over the distributor plate (6).

5. Apparatus as claimed in claim 4, **characterised in that** the drive motor (3) is mounted on a carrier (9) which is supported on the screw housing (5) and surrounds the distributor plate (6) and the guide wall (11).

## Revendications

1. Dispositif pour le remplissage d'une chambre de stockage (17) en combustible en morceaux avec un convoyeur à vis sans fin (1) qui peut déboucher au-dessus dans la chambre de stockage (17) et qui comprend une vis sans fin de convoyage (2) pouvant être entraînée à l'aide d'un moteur (3) et une enveloppe de vis sans fin (5), **caractérisé en ce qu'**au niveau de l'extrémité de sortie de l'enveloppe de vis sans fin (5) du convoyeur à vis sans fin (1) vertical, il est prévu une assiette de distribution (6) en forme d'anneau, coaxiale à un arbre de vis sans fin (4), concourrant avec au moins un éjecteur (7) entourant l'arbre de vis sans fin (4) et **en ce que** l'assiette de distribution (6) est entourée par une paroi de guidage (11) le long d'une section circonférentielle, dont le bord circonférentiel (14) faisant saillie sur l'assiette de distribution (6) dans la direction de rotation de l'arbre de vis sans fin (4) descend au moins en liaison à une section de paroi de guidage (12) avec un tracé de bord parallèle à l'assiette de distribution (6) orienté contre l'assiette de distribution (6).

2. Dispositif selon la revendication 1, **caractérisé en ce qu'**un disque de recouvrement (10) est en face de l'assiette de distribution (6) à une distance axiale, entre lequel et la paroi de guidage (11), il résulte une fente d'éjection (16) s'agrandissant dans le sens de rotation de l'arbre de vis sans fin (4).

3. Dispositif selon la revendication 1 ou 2, **caractérisé en ce que** la paroi de guidage (11) est placée de manière réglable, au moins par endroits, en face de l'assiette de distribution (6) dans le sens périphérique et/ou dans le sens axial.

4. Dispositif selon l'une des revendications 1 à 3, **caractérisé en ce que** le moteur d'entraînement (3) pour la vis sans fin de convoyage (2) est en prise au niveau de l'arbre de vis sans fin (4) faisant saillie axialement sur l'assiette de distribution (6).

5. Dispositif selon la revendication 4, **caractérisé en ce que** le moteur d'entraînement (3) est placé sur un support (9) entourant l'assiette de distribution (6) et la paroi de guidage (11), appuyé au niveau de l'enveloppe de vis sans fin (5).
